# DEMANDE DE BREVET EUROPEEN

(11) **EP 2 100 761 A1**
(43) Date de publication de la demande: **16.09.2009**
(21) Numéro de dépôt: 09153695.3
(22) Date de dépôt: 26.02.2009
(51) Int. Cl.: B60J 10/00

(54) **Sous ensemble de véhicule, notamment de véhicule automobile, comportant une structure d'encadrement et un profile d'étanchéité**

(30) Priorité: 12.03.2008 FR 0851585
(71) Demandeur: PEUGEOT CITROËN AUTOMOBILES S.A., 78140 Vélizy Villacoublay (FR)
(72) Inventeur: Barron, Gilles, 25240, BART (FR)
(74) Mandataire: Fernandez, Francis Lionel

(57) **Abrégé**

Sous ensemble de véhicule comportant d'une part une structure d'encadrement (14) délimitée par une bordure périphérique (35) et d'autre part un profilé d'étanchéité (30) comprenant une pince en forme de U ayant une âme (48) et deux ailes (49) sensiblement parallèles l'une à l'autre et chaussant la bordure périphérique (35) de la structure d'encadrement (14) et une lèvre (40) solidaire de l'une des ailes (49, 49A) du profilé (30) en faisant saillie à l'intérieur de la pince de manière à s'opposer à l'arrachement du profilé (30) de la bordure (35). La lèvre (40) fait saillie vers l'âme (48) de la pince et a au moins sa partie de bord libre (54) encastrée élastiquement dans plusieurs trous espacés (36) formés dans la bordure périphérique (35) à une certaine distance d'un chant (37) de cette bordure (35) situé en regard de l'âme (48) de la pince. Elément de carrosserie comportant une telle structure d'encadrement à trous (36), profilé d'étanchéité (30) et véhicule comportant un tel sous ensemble.

## Description

La présente invention est relative aux sous ensembles de véhicule, notamment de véhicule automobile, comportant une structure d'encadrement et un profilé d'étanchéité.

Plus particulièrement, l'invention concerne un tel sous ensemble dans lequel d'une part la structure d'encadrement est délimitée par une bordure périphérique et d'autre part le profilé d'étanchéité comprend une pince en forme de U ayant une âme et deux ailes sensiblement parallèles l'une à l'autre et chaussant la bordure périphérique de la structure d'encadrement. Une lèvre est solidaire de l'une des ailes du profilé en faisant saillie à l'intérieur de la pince de manière à s'opposer à l'arrachement du profilé de la bordure.

Un exemple de ce genre de sous ensemble est connu du document FR-A-2843076. Dans ce sous ensemble, la structure d'encadrement est un cadre de vitre appartenant à une porte latérale de véhicule. La lèvre, appelée butée de retenue, est en contact avec une excroissance de la bordure du cadre. Le montage du profilé d'étanchéité sur le cadre d'un tel sous ensemble nécessite un effort d'encliquetage augmentant la difficulté de montage. De plus, l'excroissance peut être la source de déchirures du dispositif d'étanchéité.

La présente invention a notamment pour but de remédier aux inconvénients des dispositifs de l'art antérieur.

A cet effet, selon l'invention, un sous ensemble de véhicule, notamment de véhicule automobile, comporte d'une part une structure d'encadrement délimitée par une bordure périphérique et d'autre part un profilé d'étanchéité comprenant une pince en forme de U ayant une âme et deux ailes sensiblement parallèles l'une à l'autre et chaussant la bordure périphérique de la structure d'encadrement et une lèvre solidaire de l'une des ailes du profilé en faisant saillie à l'intérieur de la pince de manière à s'opposer à l'arrachement du profilé de la bordure. La lèvre fait saillie vers l'âme de la pince et a au moins sa partie de bord libre encastrée élastiquement dans plusieurs trous espacés formés dans la bordure périphérique à une certaine distance d'un chant de cette bordure situé en regard de l'âme de la pince.

Dans divers modes de réalisation du sous ensemble selon l'invention, on peut éventuellement avoir recours en outre à l'une et/ou à l'autre des dispositions suivantes :
- la distance entre le chant de la bordure et un bord du trou adjacent au chant varie d'un trou à l'autre ;
- chaque trou a son bord adjacent au chant de la bordure défini de façon étagée ;
- l'aile de la pince raccordée à la lèvre anti-arrachement comprend une cavité dans laquelle la lèvre anti-arrachement peut s'effacer élastiquement lorsqu'elle est au contact de la bordure au voisinage des trous ;
- la pince du profilé comporte une ou plusieurs lèvres de retenue solidaires de l'aile opposée à celle raccordée à la lèvre anti-arrachement, dirigées vers l'âme de la pince et élastiquement en appui sur la face de la bordure opposée à celle comportant les trous de la bordure ;
- les trous sont de forme rectangulaire et s'étendent selon une ou plusieurs directions parallèles au chant de la bordure ;
- la structure d'encadrement appartient à une porte de véhicule et constitue un cadre de vitre de cette porte et le profilé d'étanchéité constitue une coulisse de vitre comprenant des lèvres d'étanchéité entre lesquelles peut coulisser une vitre ;
- la bordure est disposée à la périphérie externe du cadre de vitre en étant sensiblement perpendiculaire au plan général de la porte.

Par ailleurs, l'invention a également pour objet un véhicule automobile pourvu d'une carrosserie, comportant un sous ensemble selon l'invention et dans lequel la structure d'encadrement est une partie de la carrosserie.

Dans le véhicule, la carrosserie peut comporter au moins un encadrement de porte et le profilé d'étanchéité peut comporter à l'extérieur de la pince des lèvres d'étanchéité appuyant à étanchéité sur l'encadrement de porte lorsque la porte est dans une position de fermeture de l'encadrement.

Par ailleurs, l'invention a également pour objet un profilé d'étanchéité, notamment de véhicule automobile, comportant une pince en forme de U ayant une âme et deux ailes sensiblement parallèles l'une à l'autre en étant adaptée à chausser une bordure périphérique appartenant à une structure d'encadrement et une lèvre anti-arrachement solidaire de l'une des ailes du profilé en faisant saillie à l'intérieur de la pince et en étant adaptée à s'opposer à l'arrachement du profilé de la bordure. Dans le profilé d'étanchéité, la lèvre fait saillie vers l'âme de la pince en étant inclinée vers l'âme et a sa partie de bord libre qui est en regard de l'âme parallèlement à cette dernière et qui est apte à s'encastrer élastiquement dans plusieurs trous espacés formés dans la bordure périphérique à une certaine distance d'un chant de cette bordure situé en regard de l'âme de la pince.

Dans divers modes de réalisation du profilé d'étanchéité selon l'invention, on peut éventuellement avoir recours en outre à l'une et/ou à l'autre des dispositions suivantes :
- l'aile de la pince raccordée à la lèvre anti-arrachement comprend une cavité dans laquelle la lèvre anti-arrachement peut s'effacer élastiquement lorsqu'elle est au contact de la bordure au voisinage des trous ;
- la pince du profilé comporte une ou plusieurs lèvres de retenue solidaires de l'aile opposée à celle raccordée à la lèvre anti-arrachement, dirigées vers l'âme de la pince et aptes à être élastiquement en appui sur la face de la bordure opposée à celle comportant les trous de la bordure.

Par ailleurs, l'invention a également pour objet un élément de carrosserie de véhicule comportant une structure d'encadrement délimitée par une bordure périphérique apte à être chaussée par un profilé d'étanchéité comprenant une pince en forme de U ayant une âme et deux ailes sensiblement parallèles l'une à l'autre et une lèvre solidaire de l'une des ailes du profilé en faisant saillie à l'intérieur de la pince de manière à s'opposer à l'arrachement du profilé de la bordure. Dans l'élément de carrosserie, la bordure délimite plusieurs trous espacés à une certaine distance d'un chant de cette bordure et aptes à recevoir encastrée une partie de bord libre de la lèvre faisant saillie vers l'âme de la pince, le chant étant apte à être en regard de l'âme de la pince.

Dans divers modes de réalisation de l'élément de carrosserie selon l'invention, on peut éventuellement avoir recours en outre à l'une et/ou à l'autre des dispositions suivantes :
- la distance entre le chant de la bordure et le bord du trou adjacent au chant varie d'un trou à l'autre ;
- chaque trou a son bord adjacent au chant de la bordure défini de façon étagée ;
- les trous sont de forme rectangulaire et s'étendent selon une ou plusieurs directions parallèles au chant de la bordure ;
- la structure d'encadrement appartient à une porte de véhicule et constitue le cadre de vitre de cette porte ;
- la bordure est disposée à la périphérie externe du cadre de vitre en étant sensiblement perpendiculaire au plan général de la porte.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue de côté et de l'extérieur d'une porte de véhicule comportant un sous ensemble selon l'invention ;
- la figure 2 est une vue de côté et de l'intérieur de la porte de la figure 1 ;
- la figure 3 est une vue en perspective et en éclaté de la porte de la figure 1 ;
- la figure 4 est une section d'un dispositif selon l'invention dans une configuration de montage sur un cadre de porte, conformément à la ligne IV-IV de la figure 1 ;
- les figures 5 et 6 sont des détails de sections du dispositif selon l'invention monté à la figure 4, dans d'autres configurations de montage ;
- la figure 7 est une vue de dessus d'une porte d'un véhicule selon l'invention ;
- la figure 8 est une vue de côté et de l'intérieur d'un détail de la porte de la figure 7, sur laquelle une section rabattue et représentée ;
- la figure 9 est une vue schématique d'un détail de la bordure de cadre de la porte selon l'invention.

Sur les différentes figures, les mêmes références désignent des éléments identiques ou similaires.

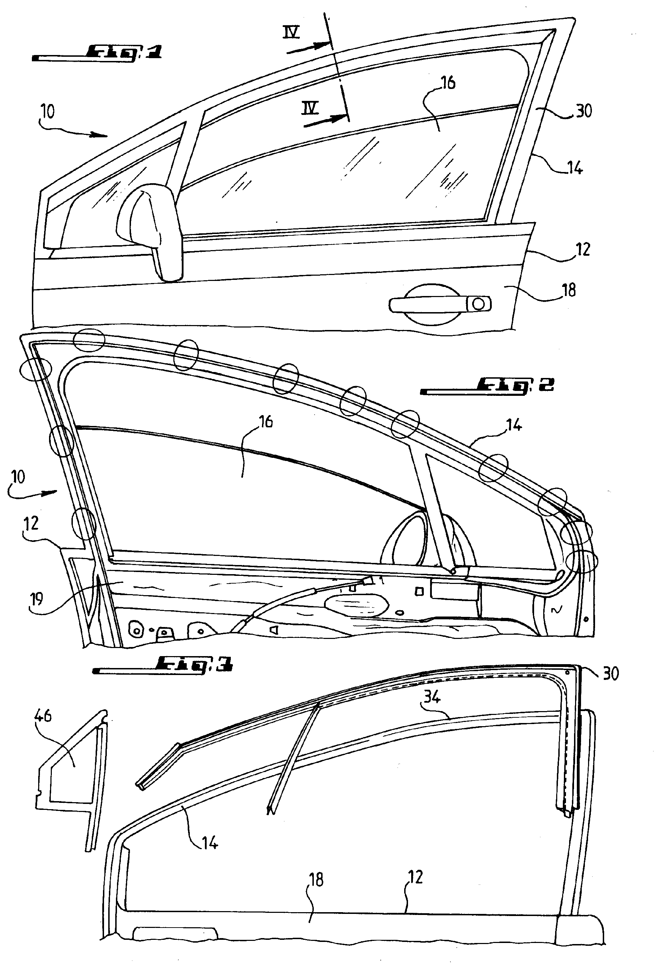

Un véhicule comporte traditionnellement une carrosserie pourvue de portes, par exemple des portes latérales, entourées d'encadrements 11. Ces portes latérales sont souvent constituées d'un caisson 12 et d'un cadre de vitre 14 (figure 1). Une vitre 16 est en général coulissante entre une position de fermeture dans laquelle elle obture le cadre 14 et une position d'ouverture dans laquelle elle est rétractée dans le caisson 12. Le caisson 12 est formé par une tôle externe 18 qui est visible de l'extérieur du véhicule et une tôle de doublure interne 19, laquelle se prolonge vers le haut par le cadre de vitre 14. Une fente 20 de passage de la vitre est située en haut du caisson 12 entre la tôle externe 18 et la doublure interne 19.

L'invention est décrite dans son application à une porte latérale battante 10 telle que ci-dessus, équipée d'un profilé d'étanchéité 30.

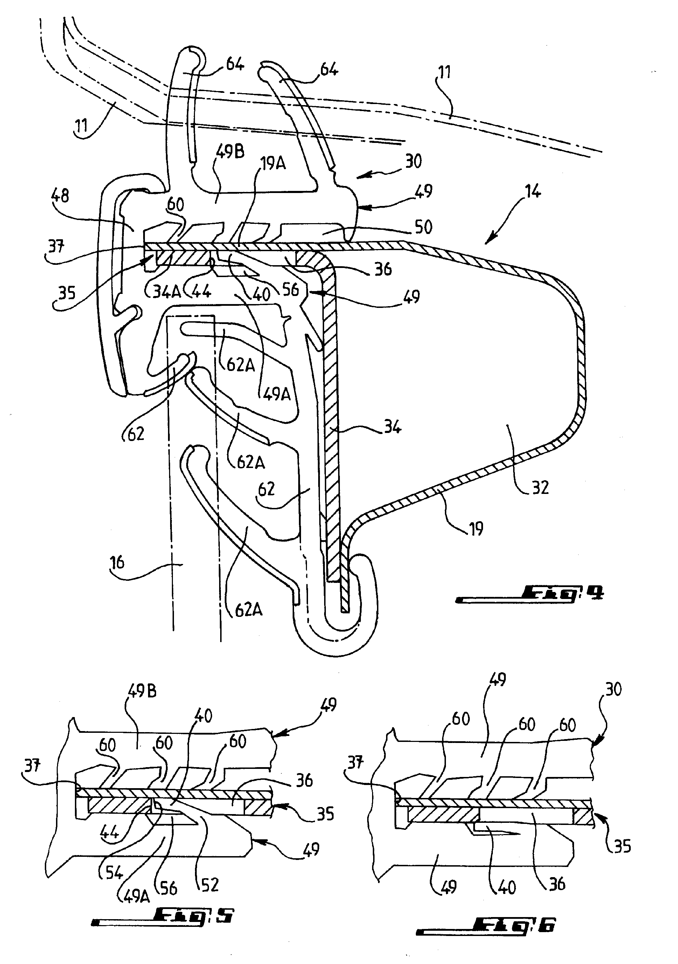

La tôle de doublure 19 est concave vers l'extérieur (figure 4). Dans sa partie formant le cadre 14, la cavité 32 de la tôle de doublure 19 est solidaire vers l'extérieur d'une tôle de fermeture 34 qui ferme la cavité 32. Un pan transversal 19A de la doublure 19 et un pan transversal 34A de la tôle de fermeture 34 sont assemblés en formant une bordure 35 du cadre 14 sensiblement perpendiculaire au plan général de la porte 10.

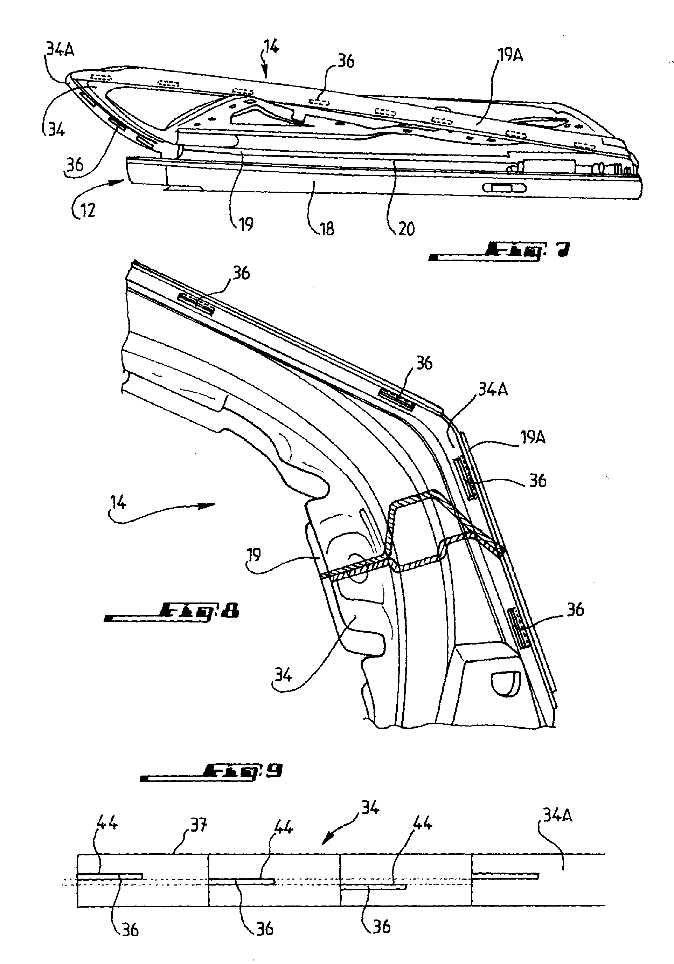

Dans le mode de réalisation représenté, le pan transversal 34A de la tôle de fermeture 34 appartenant à la bordure 35 du cadre 14 délimite une pluralité de trous rectangulaires anti-arrachement 36 s'étendant sensiblement longitudinalement, parallèlement au chant de 37 la bordure 35, et dont le but est de recevoir encastrée au moins une partie de bord libre d'une lèvre 40 du profilé d'étanchéité 30 de manière à s'opposer à l'arrachement dudit profilé 30 de la bordure 35. Chaque trou 36, dont l'emplacement sur le cadre 14 est schématisé par un cercle à la figure 2, a par exemple une longueur comprise entre 40 et 50 millimètres et une largeur de l'ordre de 10 millimètres. Les trous 36 sont par exemple espacés de 100 à 130 millimètres pour éviter de fragiliser le cadre de vitre 14. Deux trous 36 peuvent être plus rapprochés à proximités des angles du cadre 14, comme visible à la figure 8, pour améliorer l'anti-arrachement dans ces angles.

Comme représenté à la figure 9, deux trous anti-arrachement 36 adjacents sont transversalement décalés trois par trois. Le bord extérieur 44 d'un trou n'est pas aligné avec le bord extérieur des deux trous qui lui sont adjacents. De cette façon, la distance entre le chant 37 de la bordure 35 et le bord du trou adjacent au chant varie d'un trou 36 à l'autre.

Le profilé d'étanchéité 30 sert à l'étanchéité entre la porte 10 et l'encadrement 11, à l'étanchéité entre la vitre coulissante 16 et le cadre 14 tout en servant de coulisse de vitre, et à l'étanchéité autour d'une vitre fixe 46 montée à l'avant du cadre 14, devant la vitre coulissante 16.

Le profilé d'étanchéité 30 comporte une partie centrale de fixation de section transversale sensiblement en U. La partie de fixation, typiquement en élastomère extrudé recouvrant éventuellement un insert métallique, comporte une âme 48 sensiblement verticale, prévue pour s'étendre longitudinalement côté extérieur de la porte, et deux ailes transversales 49. L'âme 48 et les ailes 49 définissent une pince qui délimite une rainure 50 intérieurement à la partie centrale en U.

Dans le mode de réalisation représenté, l'une des ailes 49, en l'espèce l'aile intérieure 49A de la partie centrale de fixation, supporte la lèvre élastique anti-arrachement 40 s'étendant inclinée vers l'âme dans la rainure 50.

La lèvre anti-arrachement 40 comprend une racine 52 raccordée à l'aile 49A vers l'extrémité libre de cette dernière. Le bord d'extrémité libre 54 de la lèvre 40 est en regard de l'âme 48 en étant sensiblement parallèle à cette dernière. La lèvre 40 peut pivoter élastiquement à sa racine 52. Elle a ainsi des propriétés de rappel élastique tendant à la maintenir dans une position de repos en saillie dans la rainure 50.

L'aile intérieure 49A de la pince définit, entre la racine 52 et l'âme 48, une cavité de repli 56 dans laquelle la lèvre 40 peut s'effacer élastiquement dans une position repliée en étant sensiblement parallèle aux ailes 49. Autour de la cavité 56, l'aile 49A forme un talon ayant dans la rainure 50 une surface intérieure d'appui plan.

L'aile extérieure 49B de la pince supporte trois lèvres de retenue 60 aptes à frotter sur la bordure 35 du cadre 14, sur la surface extérieure du pan transversal 19A de la tôle de doublure 19. Les lèvres de retenue 60 sont plus courtes que la lèvre anti-arrachement 40. Elles s'étendent élastiquement en saillie dans la rainure 50 en étant inclinée vers l'âme 48 et en ayant leur extrémité libre sensiblement parallèle aux ailes 49.

Le profilé d'étanchéité 30 comporte des lèvres de coulisse 62 servant tant à l'étanchéité entre le cadre 14 et la vitre coulissante 16 qu'au guidage à coulissement de la vitre 16 dans le cadre 14. Ces lèvres de coulisse 62 sont raccordées à l'aile intérieure 49A de la partie de fixation. L'une des lèvres de coulisse 62 est une lèvre arquée raccordée côté extérieur à l'âme 48, pour appuyer à étanchéité sur la surface extérieure de la vitre coulissante. L'autre de ces lèvres de coulisse comporte une lame sensiblement verticale raccordée à côté intérieur à l'extrémité libre de l'aile intérieure. Des lames arquées d'étanchéité transversales 62A sont raccordées à la lame verticale de façon à pouvoir s'appuyer sur la face intérieure de la vitre coulissante 16.

Le profilé d'étanchéité 30 comporte des lèvres externes d'étanchéité 64 servant à l'étanchéité entre le cadre 14 et l'encadrement de porte 11. La racine des lèvres externes d'étanchéité 64 est raccordée à l'aile extérieure 49B de la pince. En position de repos, les lèvres externes d'étanchéité 64 sont sensiblement perpendiculaires aux ailes 49 de la partie de fixation.

Lors de l'assemblage du profilé d'étanchéité sur le cadre 14, la partie de fixation formant pince est transversalement engagée sur la bordure transversale du cadre. Les lèvres anti-arrachement 40 et de retenue 60 sont déformées en étant repliées en direction de l'aile 49 sur laquelle chacune est raccordée.

Quand l'âme 48 arrive en contact de butée contre la périphérie de la bordure du cadre, la lèvre anti-arrachement 40 est d'une part entre les trous 36 en position de repli dans la cavité 56 en étant dans l'alignement du talon, en appui sur la bordure du cadre et d'autre part, du fait de son élasticité, en position déployée encastrée dans tout ou partie des trous 36 en fonction des dispersions dimensionnelles de la bordure 35 et du profilé 30.

Dans certains des trous 36, comme représenté à la figure 4, il y a un jeu de fonctionnement entre le bord extérieur du trou et l'extrémité libre de la lèvre d'encliquetage. Dans ce cas, ce jeu crée un retard de fonctionnement de la lèvre quand elle doit assurer son rôle d'anti-arrachement du dispositif d'étanchéité.

Dans certains des trous, comme représenté à la figure 5, il n'y a quasiment pas de jeu de fonctionnement entre le bord extérieur 44 du trou et l'extrémité libre de la lèvre d'encliquetage 40. Le retard de fonctionnement est ici imperceptible.

En regard de certains des trous 36, comme représenté à la figure 6, la largeur de la bordure 35 séparant le trou 36 et le chant 37 à la périphérie correspondante du cadre 14 est supérieure à la distance séparant le fond de la rainure 50 constitué par l'âme 48 et l'extrémité libre de la lèvre anti-arrachement 40, si bien que cette dernière reste en position repliée. A cet endroit du cadre 14, la lèvre 40 n'assure pas sa fonction d'anti-arrachement du dispositif d'étanchéité 30. Les trous adjacents sont suffisamment proches pour éviter que les problèmes d'arrachement du profilé d'étanchéité.

Quand la porte 10 est fermée, les lèvres externes d'étanchéité 64 sont rabattues contre l'encadrement de porte 11 vers l'extérieur du véhicule. A l'ouverture de la porte 10, les lèvres anti-arrachement 40 et de retenue 60 permettent avantageusement d'éviter tout risque de déplacement à arrachement du profilé d'étanchéité 30 par rapport au cadre 14.

Quand la vitre 16 est fermée, elle rabat les lèvres de coulisse 62, 62A en direction de l'aile 49A intérieure de la partie de fixation. A l'ouverture de la vitre 16, le talon est suffisamment rigide et la force de rappel de la lèvre anti-arrachement 40 suffisamment fort, en particulier au niveau de sa racine 52, pour que le coulissement de la vitre 16 dans les lèvres de coulisse n'entraîne pas de risque de dégagement de la lèvre anti-arrachement 40 par rapport aux trous 36.

Avantageusement, la lèvre anti-arrachement 40 associée au décalage des trous 36 les uns par rapport aux autre minimise le risque d'arrachement du profilé d'étanchéité 30 par rapport au cadre 14.

Avantageusement, l'encastrement élastique de la lèvre anti-arrachement 40 dans les trous 36 du cadre 14 n'entraîne pas d'effort spécifique lors du montage du profilé d'étanchéité 30 sur le cadre 14.

Avantageusement, l'encastrement élastique de la lèvre anti-arrachement 40 dans les trous 36 du cadre 14 permet d'assurer la fonction anti-arrachement en compensant les dispersions dimensionnelles de la bordure 35 et du profilé d'étanchéité 30.

Dans la description qui précède, la lèvre anti-arrachement 40 est continue, en étant par exemple fabriquée par extrusion, mais en variante non représentée, elle est découpée après extrusion de façon que son bord libre présente des découpes transversales définissant des tronçons juxtaposés dont la pénétration dans les trous de la bordure est facilitée.

En variante non représentée, chaque trou a son bord adjacent au chant de la bordure défini de façon étagée. Ainsi, le nombre de trou peut être réduit et chaque trou peut être plus long, en ayant par exemple une longueur supérieure à 50 millimètres.

En variante non représentée, la lèvre d'encliquetage est raccordée à l'aile extérieure de la partie de fixation alors que les lèvres de retenu sont raccordées à l'aile intérieure, les trous étant alors dans la tôle de doublure.

Dans la description qui précède, l'invention est décrite en étant appliquée à une structure d'encadrement constituée par un cadre vitre dans une porte latérale. En variante, non représentée, l'invention est appliquée à une structure d'encadrement formant le contour d'une porte en incluant le caisson. En variante, non représentée, l'invention est appliquée à une structure d'encadrement formant un encadrement de porte, c'est-à-dire sur des parties de carrosserie formant le dormant de la porte qui est une porte latérale ou une porte arrière de type hayon.

## Revendications

1. Sous ensemble de véhicule, notamment de véhicule automobile, comportant d'une part une structure d'encadrement (14) délimitée par une bordure périphérique (35) et d'autre part un profilé d'étanchéité (30) comprenant une pince en forme de U ayant une âme (48) et deux ailes (49) sensiblement parallèles l'une à l'autre et chaussant la bordure périphérique (35) de la structure d'encadrement (14) et une lèvre (40) solidaire de l'une des ailes (49, 49A) du profilé (30) en faisant saillie à l'intérieur de la pince de manière à s'opposer à l'arrachement du profilé (30) de la bordure (35), **caractérisé en ce que** la lèvre (40) fait saillie vers l'âme (48) de la pince et a au moins sa partie de bord libre (54) encastrée élastiquement dans plusieurs trous espacés (36) formés dans la bordure périphérique (35) à une certaine distance d'un chant (37) de cette bordure (35) situé en regard de l'âme (48) de la pince et **en ce que** la distance entre le chant (37) de la bordure (35) et un bord du trou (44, 36) adjacent au chant (37) varie d'un trou (36) à l'autre.

2. Sous ensemble selon la revendication 1, **caractérisé en ce que** chaque trou (36) a son bord (44) adjacent au chant (37) de la bordure (35) défini de façon étagée.

3. Sous ensemble selon l'une quelconque des revendications précédentes, **caractérisé en ce que** l'aile (49, 49A) de la pince raccordée à la lèvre anti-arrachement (40) comprend une cavité (56) dans laquelle la lèvre anti-arrachement (40) peut s'effacer élastiquement lorsqu'elle est au contact de la bordure (35) au voisinage des trous (36).

4. Sous ensemble selon l'une quelconque des revendications précédentes, **caractérisé en ce que** la pince du profilé (30) comporte une ou plusieurs lèvres de retenue (60) solidaires de l'aile (49B) opposée à celle (49A) raccordée à la lèvre anti-arrachement (40), dirigées vers l'âme (48) de la pince et élastiquement en appui sur la face de la bordure (35) opposée à celle comportant les trous (36) de la bordure (35).

5. Sous ensemble selon l'une quelconque des revendications précédentes, **caractérisé en ce que** les trous (36) sont de forme rectangulaire et s'étendent selon une ou plusieurs directions parallèles au chant (37) de la bordure (35).

6. Sous ensemble selon l'une quelconque des revendications précédentes, **caractérisé en ce que** la structure d'encadrement (14) appartient à une porte (10) de véhicule et constitue un cadre de vitre (14) de cette porte (10) et **en ce que** le profilé d'étanchéité (30) constitue une coulisse de vitre comprenant des lèvres d'étanchéité (62, 62A) entre lesquelles peut coulisser une vitre (16).

7. Sous ensemble selon la revendication précédente, **caractérisé en ce que** la bordure (35) est disposée à la périphérie externe du cadre (14) de vitre en étant sensiblement perpendiculaire au plan général de la porte (10).

8. Véhicule automobile pourvu d'une carrosserie, **caractérisé en ce qu'**il comporte au moins un sous ensemble conforme à l'une quelconque des revendications précédentes et dans lequel la structure d'encadrement (14) est une partie de la carrosserie.

9. Véhicule automobile selon la revendication 8 et selon l'une quelconque des revendications 6 à 7, **caractérisé en ce que** la carrosserie comporte au moins un encadrement de porte (14) et **en ce que** le profilé d'étanchéité (30) comporte à l'extérieur de la pince des lèvres d'étanchéité (64) appuyant à étanchéité sur l'encadrement de porte (14) lorsque la porte (10) est dans une position de fermeture de l'encadrement (14).

10. Profilé d'étanchéité, notamment de véhicule automobile, comportant une pince en forme de U ayant une âme (48) et deux ailes (49) sensiblement parallèles l'une à l'autre en étant adaptée à chausser une bordure périphérique (35) appartenant à une structure d'encadrement (14) et une lèvre anti-arrachement (40) solidaire de l'une des ailes (49, 49A) du profilé (30) en faisant saillie à l'intérieur de la pince et en étant adaptée à s'opposer à l'arrachement du profilé (30) de la bordure (35), **caractérisé en ce que** la lèvre (40) fait saillie vers l'âme (48) de la pince en étant inclinée vers l'âme (48) et a sa partie de bord libre (54) qui est en regard de l'âme (48) parallèlement à cette dernière et qui est apte à s'encastrer élastiquement dans plusieurs trous espacés (36) formés dans la bordure périphérique (35) à une certaine distance d'un chant (37) de cette bordure situé en regard de l'âme (48) de la pince, la distance entre le chant (37) de la bordure (35) et un bord du trou (44, 36) adjacent au chant (37) variant d'un trou (36) à l'autre.

11. Profilé d'étanchéité selon la revendication précédente, **caractérisé en ce que** l'aile (49, 49A) de la pince raccordée à la lèvre anti-arrachement (40) comprend une cavité (56) dans laquelle la lèvre anti-arrachement (40) peut s'effacer élastiquement lorsqu'elle est au contact de la bordure (35) au voisinage des trous (36).

12. Profilé d'étanchéité selon l'une quelconque des revendications 10 à 11, **caractérisé en ce que** la pince du profilé (30) comporte une ou plusieurs lèvres de retenue (62, 62A) solidaires de l'aile (49B) opposée à celle (49A) raccordée à la lèvre anti-arrachement (40), dirigées vers l'âme (48) de la pince et aptes à être élastiquement en appui sur la face de la bordure (35) opposée à celle comportant les trous (36) de la bordure (35).

13. Elément de carrosserie de véhicule comportant une structure d'encadrement (14) délimitée par une bordure périphérique (35) apte à être chaussée par un profilé d'étanchéité (30) comprenant une pince en forme de U ayant une âme (48) et deux ailes (49) sensiblement parallèles l'une à l'autre et une lèvre (40) solidaire de l'une des ailes (49, 49A) du profilé (30) en faisant saillie à l'intérieur de la pince de manière à s'opposer à l'arrachement du profilé (30) de la bordure (35), **caractérisé en ce que** la bordure (35) délimite plusieurs trous espacés (36) à une certaine distance d'un chant (37) de cette bordure et aptes à recevoir encastrée une partie de bord libre (54) de la lèvre (40) faisant saillie vers l'âme (48) de la pince, le chant (37) étant apte à être en regard de l'âme (48) de la pince, la distance entre le chant (37) de la bordure (35) et un bord du trou (44, 36) adjacent au chant (37) variant d'un trou (36) à l'autre.

14. Elément de carrosserie selon la revendication 13, **caractérisé en ce que** chaque trou (36) a son bord (44) adjacent au chant (37) de la bordure (35) défini de façon étagée.

15. Elément de carrosserie selon l'une quelconque des revendications 13 à 14, **caractérisé en ce que** les trous (36) sont de forme rectangulaire et s'étendent selon une ou plusieurs directions parallèles au chant (37) de la bordure (35).

16. Elément de carrosserie selon l'une quelconque des revendications 13 à 15, **caractérisé en ce que** la structure d'encadrement (14) appartient à une porte (10) de véhicule et constitue le cadre de vitre (14) de cette porte (10).

17. Elément de carrosserie selon la revendication précédente, **caractérisé en ce que** la bordure (35) est disposée à la périphérie externe du cadre de vitre (14) en étant sensiblement perpendiculaire au plan général de la porte (10).
